(19) Europäisches Patentamt
European Patent Office
Office européen des brevets

(11) **EP 2 003 304 B1**

(12) **EUROPÄISCHE PATENTSCHRIFT**

(45) Veröffentlichungstag und Bekanntmachung des Hinweises auf die Patenterteilung:
**24.04.2013 Patentblatt 2013/17**

(21) Anmeldenummer: **07110323.8**

(22) Anmeldetag: **15.06.2007**

(51) Int Cl.:
***F02B 23/06*** *(2006.01)*

(54) **Kolben mit Kolbenmulde für eine Brennkraftmaschine und Verfahren zur Gemischbildung unter Verwendung einer Einspritzeinrichtung und eines derartigen Kolbens**

Piston with a piston bowl for a combustion engine and method for fuel-mixture generation using an injection device and such a piston

Piston doté d'une cavité pour un moteur à combustion interne et procédé destiné à la formation d'un mélange en utilisant un dispositif de vaporisation et un tel piston

(84) Benannte Vertragsstaaten:
**DE FR GB**

(43) Veröffentlichungstag der Anmeldung:
**17.12.2008 Patentblatt 2008/51**

(73) Patentinhaber: **Ford Global Technologies, LLC Dearborn, MI 48126 (US)**

(72) Erfinder:
 • **Nitsche, Thomas**
 **41464 Neuss (DE)**
 • **Conée, Claudia**
 **52074, Aachen (DE)**
 • **Willems, Werner**
 **52078, Aachen (DE)**
 • **Wunderlich, Frank**
 **52134, Herzogenrath (DE)**
 • **Kraemer, Frank**
 **53819, Neunkirchen-Seelscheid (DE)**
 • **Mesic, Emir**
 **52062, Aachen (DE)**

(74) Vertreter: **Drömer, Hans-Carsten Henry-Ford Str. 1 50725 Köln (DE)**

(56) Entgegenhaltungen:
 **EP-A- 1 561 924     FR-A- 2 878 567
 JP-A- 2001 227 346     US-A1- 2005 066 929**

**Beschreibung**

Die Erfindung betrifft einen Kolben mit Kolbenboden und im Kolbenboden vorgesehener Kolbenmulde, insbesondere für eine Brennkraftmaschine, welche einen Betrieb in zwei unterschiedlichen Betriebsmodi ermöglicht, der - im Betrieb der Brennkraftmaschine - entlang einer Kolbenlängsachse translatorisch bewegbar ist und bei dem die Kolbenmulde eine Omegaförmige Grundform aufweist.

Des Weiteren betrifft die Erfindung ein Verfahren zur Bildung eines Kraftstoff-Luft-Gemisches unter Verwendung einer Einspritzeinrichtung und eines Kolbens der oben genannten Art, bei dem mittels der Einspritzeinrichtung mindestens eine Einspritzung von Kraftstoff direkt in den Brennraum einer Brennkraftmaschine vorgenommen wird, wobei der Brennraum durch den Kolbenboden des Kolbens und ein Zylinderrohr mitbegrenzt wird.

Der Marktanteil kleiner schnelllaufender Dieselmotoren wächst stetig. Die Gründe hierfür liegen einerseits in dem niedrigen Kraftstoffverbrauch und andererseits im vergleichsweise guten Leistungsangebot moderner Dieselmotoren der jüngeren Generationen. Der geringe Kraftstoffverbrauch resultiert unter anderem aus einem hohen Verdichtungsverhältnis und geringen Ladungswechselverlusten aufgrund der Qualitätsregelung des Dieselmotors.

Nachteilig an herkömmlichen dieselmotorischen Verfahren sind insbesondere die - aufgrund der prozeßbedingten hohen Temperaturen - hohen Stickoxidemissionen ($NO_x$).

Bei Dieselmotoren, die mit einem Luftüberschuß betrieben werden, insbesondere direkteinspritzenden Dieselmotoren, können die im Abgas befindlichen Stickoxide prinzipbedingt - d. h. aufgrund der fehlenden Reduktionsmittel - nicht ohne zusätzliche Maßnahmen reduziert werden. Zur Reduzierung der Stickoxide werden deshalb selektive Katalysatoren - sogenannte SCR-Katalysatoren - eingesetzt, bei denen gezielt Reduktionsmittel in das Abgas eingebracht werden, um die Stickoxide selektiv zu vermindern. Als Reduktionsmittel kommen neben Ammoniak und Harnstoff auch unverbrannte Kohlenwasserstoffe zum Einsatz. Letzteres wird auch als HC-Anreicherung bezeichnet.

Grundsätzlich kann den Stickoxiden auch mit sogenannten Stickoxidspeicherkatalysatoren entgegengetreten werden. Dabei werden die Stickoxide zunächst während einer Speicherphase im Katalysator gesammelt, um dann während einer Regenerationsphase mittels eines unterstöchiometrischen Betriebs (beispielsweise $\lambda < 0{,}95$) der Brennkraftmaschine reduziert zu werden. Speicherkatalysatoren setzen aber - zur Vermeidung hoher Rußemissionen - die Verbrennung eines homogenen Gemisches voraus, weshalb sie zwar für magerbetriebene Ottomotoren, aber insbesondere nicht für direkteinspritzende Dieselmotoren geeignet sind.

Auch wenn eine Reduzierung der Stickoxidemissionen mit Hilfe der Abgasnachbehandlung grundsätzlich möglich ist, erfordern die immer strengeren gesetzlichen Grenzwerte bezüglich der Schadstoffemissionen von Kraftfahrzeugen immer voluminösere Abgasnachbehandlungssysteme. Zur Einhaltung zukünftiger Grenzwerte könnte dabei ein Volumen des Abgasnachbehandlungssystems erforderlich werden, das ein Vielfaches des Hubraums der Brennkraftmaschine erreicht.

Dies führt nicht nur zu Problemen beim Packaging, sondern auch zu ungünstigen Randbedingungen nach einem Kaltstart der Brennkraftmaschine, da die thermische Trägheit des Abgassystems bedingt durch die größere Masse d. h. das höhere Gewicht zunimmt, so daß sich die Warmlaufphase verlängert. Des weiteren verursacht die größere Menge an Edelmetall zur Beschichtung des Abgasnachbehandlungssystems höhere Kosten.

Das zuvor Gesagte macht deutlich, daß - zur Einhaltung zukünftiger Grenzwerte - der Bildung von Stickoxiden bereits während der Verbrennung entgegen gewirkt werden muß, um die Stickoxid-Rohemissionen (engine-out-emissions) zu reduzieren.

Eine aus dem Stand der Technik bekannte innermotorische Maßnahme zur Verringerung der Stickoxidemissionen besteht darin, die Verbrennungstemperaturen, insbesondere die Prozeßspitzentemperaturen, zu senken. Mit sinkenden Prozeßtemperaturen nimmt auch die Bildung von Stickoxiden ab.

Niedrigere Prozeßtemperaturen können beispielsweise durch die Rückführung heißen Abgases (AGR) und/oder eine Ladeluftkühlung realisiert werden.

Ein weiterer Nachteil des direkteinspritzenden dieselmotorischen Verfahrens sind die Rußemissionen infolge der Inhomogenität des Kraftstoff-Luft-Gemisches.

Bei herkömmlichen direkteinspritzenden Dieselmotoren wird gegen Ende der Kompressionsphase Kraftstoff in die im Brennraum befindliche Luft eingespritzt. Für die Einspritzung des Kraftstoffes, die Gemischaufbereitung, nämlich die Durchmischung von Luft und Kraftstoff und die Aufbereitung des Kraftstoffes im Rahmen von Vorreaktionen einschließlich der Verdampfung, sowie der Selbstzündung des aufbereiteten Gemisches und der Verbrennung stehen bei kleinen schnelllaufenden Dieselmotoren nur sehr kurze Zeiträume in der Größenordnung von Millisekunden zur Verfügung. Infolgedessen liegt in der Regel während der Zündung und Verbrennung ein sehr inhomogenes Kraftstoff-Luft-Gemisch vor, welches nicht durch ein einheitliches Luftverhältnis charakterisiert ist, sondern sowohl sehr magere Gemischteile als auch sehr fette Gemischteile aufweist.

Dabei wird in Bereichen des Gemisches mit einem unterstöchiometrischen lokalen Luftverhältnis ($\lambda < 1$) und bei Temperaturen oberhalb 1500°K unter extremen Luftmangel Ruß gebildet.

Zur Minimierung der Emission von Rußpartikeln werden nach dem Stand der Technik sogenannte regenerierbare Partikelfilter eingesetzt, die die Rußpartikel aus dem Abgas herausfiltern und speichern, wobei diese Rußpartikel im Rahmen der Regeneration des Filters intermittierend verbrannt werden.

In der Regel werden möglichst lange Regenerationsintervalle angestrebt, was zu größeren Filtervolumen und folglich zu ähnlichen Problemen führt wie bereits weiter oben für die Abgasnachbehandlung der Stickoxide ausgeführt wurde.

Zur Einhaltung zukünftiger Grenzwerte muß der Bildung von Ruß bereits während der Verbrennung entgegen gewirkt werden, was durch einen ausreichend großen Luftüberschuß und eine optimierte Gemischbildung mit einer möglichst weitgehenden Homogenisierung erreicht werden kann.

Bei herkömmlichen Dieselmotoren lassen sich die Partikelemissionen und die Stickoxidemissionen nicht gleichzeitig durch innermotorische Maßnahmen reduzieren.

Mit dem Ziel, der Bildung von Schadstoffen bereits bei der Verbrennung entgegen zu wirken, werden zunehmend neue Brennverfahren entwickelt und untersucht. Häufig sind dies Hybrid-Brennverfahren, die darauf ausgerichtet sind, die Vorteile des dieselmotorischen Verfahrens mit den Vorteilen des ottomotorischen Verfahrens zu verbinden. Dabei konzentrieren sich die Entwicklungsarbeiten in erster Linie auf die wesentlichen Merkmale der beiden Verfahren.

Das ottomotorische Verfahren ist dabei gekennzeichnet durch eine Gemischverdichtung, ein homogenes Gemisch, eine Fremdzündung, sowie die Quantitätsregelung, wohingegen das dieselmotorische Verfahren charakterisiert ist durch eine Luftverdichtung, ein inhomogenes Gemisch, eine Selbstzündung und die Qualitätsregelung.

Die Entwicklungsarbeiten konzentrieren sich zunehmend auf die sogenannten LTC-Verfahren (Low Temperature Combustion), da diese Verfahren aufgrund ihrer niedrigen Prozeßtemperaturen geeignet erscheinen, der Entstehung von Stickoxiden schon bei der Verbrennung spürbar entgegenzuwirken und auf diese Weise die Stickoxidemissionen der Brennkraftmaschine zu verringern.

Ein Hybrid-Brennverfahren, das durch niedrige Prozeßtemperaturen gekennzeichnet ist und ein Beispiel für ein LTC-Verfahren darstellt, ist das sogenannte HCCI-Verfahren. Im Vergleich zu herkömmlichen dieselmotorischen Verfahren erweist sich das HCCI-Verfahren im Hinblick auf die kritischen Schadstoffemissionen, nämlich Ruß und $NO_x$, als wesentlich günstiger. Das HCCI-Verfahren (Homogenous-Charge Compression-Ignition) wird auch als CAI-Verfahren (**C**ontrolled **A**uto-**I**gnition) bezeichnet und basiert auf einer kontrollierten Selbstzündung des dem Zylinder zugeführten Kraftstoffes.

Dabei wird der Kraftstoff unter Luftüberschuß - also überstöchiometrisch - verbrannt. Der im mageren Bereich betriebene Dieselmotor weist aufgrund des stark verdünnten homogenisierten Kraftstoff-Luft-Gemisches und der damit verbundenen niedrigen Verbrennungstemperaturen vergleichsweise geringe Stickoxidemissionen ($NO_x$) auf und ebenfalls infolge des mageren homogenisierten Gemisches nahezu keine Rußemissionen.

Der thermische Wirkungsgrad des HCCI-Verfahrens ist hoch, da das homogenisierte Gemisch volumetrisch verbrennt, d. h. sich keine Diffusionsflamme durch den Brennraum fortpflanzt, sondern im gesamten Brennraum nahezu gleichzeitig bei konstantem Volumen gezündet und verbrannt wird.

Das HCCI-Verfahren und eine Brennkraftmaschine, die dieses Verfahren zur Verbrennung des Kraftstoffes verwendet, werden in der US 6,390,054 B1 beschrieben, wobei die Brennkraftmaschine ein Ottomotor ist, so daß nicht sämtliche in der US 6,390,054 B1 gemachten Ausführungen auf den hier maßgeblichen Dieselmotor übertragbar sind.

Dies liegt insbesondere darin begründet, daß die Eigenschaften von Benzin einerseits und Dieselkraftstoff andererseits doch zu unterschiedlich sind. So ist Dieselkraftstoff im Vergleich zu Benzin leichter entzündbar, weshalb eine sichere Selbstzündung in der Regel gegeben ist und Fehlzündungen und Zündaussetzer beim Dieselmotor eher unerheblich sind. Andererseits ist der Zeitpunkt der Selbstzündung bzw. der Zündverzug schwerer zu steuern, wohingegen Dieselkraftstoff nicht so leicht zu verdampfen ist wie Ottokraftstoff, was hohe Anforderungen an die Gemischaufbereitung stellt.

Trotz des sehr günstigen Emissionsverhaltens weist das dieselmotorische HCCI-Verfahren auch Nachteile auf, die denen des ottomotorischen HCCI-Verfahrens ähnlich sind.

Der wesentliche Nachteil des HCCI-Verfahrens besteht darin, daß dieses Verfahren nicht in sämtlichen Betriebspunkten einer Brennkraftmaschine eingesetzt werden kann, so daß sich die - oben bereits beschriebenen - Vorteile nur in einem kleinen Bereich des Motorkennfeldes (Last über Drehzahl) nutzen lassen.

Dies ist auch der Grund dafür, daß nach dem Stand der Technik eine Brennkraftmaschine nicht ausschließlich nach dem HCCI-Verfahren betrieben werden kann, sondern grundsätzlich ein Hybrid-Antrieb erforderlich ist d.h. eine Brennkraftmaschine, welche einen Betrieb in zwei unterschiedlichen Betriebsmodi ermöglicht, um die Brennkraftmaschine in den Betriebspunkten, in denen das HCCI-Verfahren versagt, trotzdem betrieben zu können. Neben dem HCCI-Verfahren kommt dabei ein konventionelles dieselmotorisches Verfahren zum Einsatz, bei dem sich nach der Selbstzündung eine Diffusionsflamme im Brennraum ausbreitet.

Das HCCI-Verfahren kann insbesondere nicht bei hohen Lasten und hohen Drehzahlen eingesetzt werden. Die Beschränkungen in der Anwendung des HCCI-Verfahrens ergeben sich dabei grundsätzlich aus der Steuerung des Zündzeitpunktes d. h. der Selbstzündung und der Steuerung der Brenngeschwindigkeit d. h. des Brennverlaufs. Die Selbstzündung und die Brenngeschwindigkeit reagieren sehr empfindlich auf Änderungen in der Temperatur der Zylinderladung, Änderungen im Luftverhältnis und Drehzahländerungen.

Mit zunehmender Last wird die Selbstzündung infolge des abnehmenden Luftverhältnisses nach früh verschoben d. h. das Kraftstoff-Luftgemisch zündet in der Kompressionsphase zu einem früheren Zeitpunkt, wobei die Umsatzraten bzw. die Brenngeschwindigkeit ebenfalls zunehmen. Infolge der weit vor dem oberen Totpunkt (OT) freigesetzten Verbrennungswärme sinkt der thermische Wirkungsgrad. Wird diesem Effekt durch ein Verschieben des Einspritzzeitpunktes nach spät entgegengewirkt, ist dies nur bedingt zielführend, da hierdurch auch die Gemischaufbereitung, insbesondere die Homogenisierung, nachteilig beeinträchtigt wird.

Mit zunehmender Drehzahl wird die Zeit, die zur Aufbereitung des Kraftstoff-Luftgemisches im Rahmen von Vorreaktionen zur Verfügung gestellt wird, verkürzt, so daß bei hohen Drehzahlen der Schwerpunkt der Verbrennung nach spät verschoben wird, wodurch sich der thermische Wirkungsgrad des Verbrennungsprozesses verschlechtert.

Um den Bereich im Motorenkennfeld, in dem das HCCI-Verfahren angewendet werden kann, hin zu höheren Lasten und Drehzahlen auszudehnen d. h. zu vergrößern, müssen Maßnahmen ergriffen werden, welche eine bessere Steuerung der Selbstzündung und eine verbesserte Homogenisierung des Kraftstoff-Luft-Gemisches auch bei hohen Drehzahlen gestatten. Zielführend können hierbei neue Verfahren zur Gemischbildung und neuartige Kolben bzw. Kolbenformen sein.

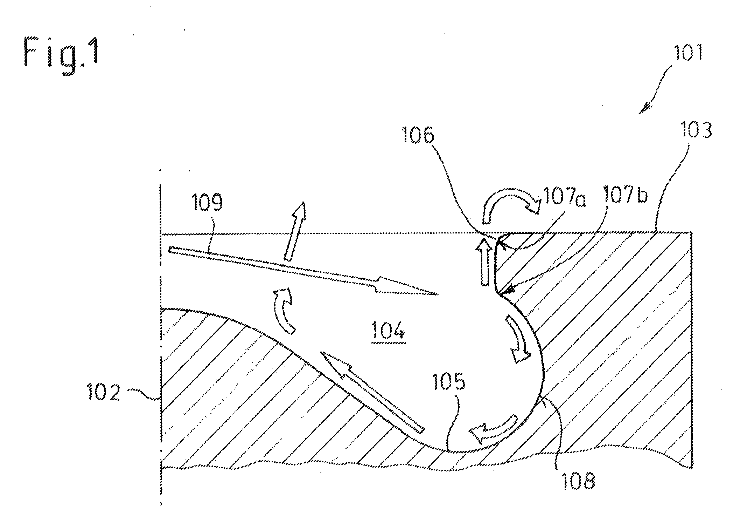

Die Kolbenmulde 104 eines herkömmlichen Kolbens 101 hat gemäß Figur 1 einen konkaven Bereich 108, der zur Ausbildung der Omegaförmigen Grundform der Kolbenmulde 104 dient, wobei die der Kolbenlängsachse 102 zugewandte Muldenoberfläche 105 zwei konvexe Teilbereiche 107a, 107b aufweist, von denen ein erster Teilbereich 107a den Muldenrand 106 ausbildet und ein zweiter Teilbereich 107b in die Kolbenmulde 104 hineinragt. Die beiden konvexen Teilbereiche 107a, 107b sind über einen zylinderförmigen Wandabschnitt miteinander verbunden. Ein Beispiel eines solchen

Bei dem herkömmlichen Kolben 101 mit konventioneller Muldenform 104 wird der Kraftstoff gemäß Figur 1 in der Weise eingespritzt, daß die Einspritzstrahlen 109 auf den zweiten konvexen Teilbereich 107b gelenkt werden, wobei die einzelnen Einspritzstrahlen 109 beim Auftreffen auf die Muldenoberfläche 105 in mehrere divergierende Kraftstoff-Teilstrahlen aufgespalten, teilweise aus der Kolbenmulde 104 heraus beschleunigt und teilweise umgelenkt werden Dabei vermischt der Kraftstoff sich weiträumig mit der im Brennraum befindlichen Luft, so daß eine gute Luftausnutzung gewährleistet ist.

Die Aufsplittung des Einspritzstrahles in mehrere Teilstrahlen und das Beschleunigen dieser Teilstrahlen aus der Kolbenmulde heraus unter Ausnutzung der kinetischen Energie des eingespritzten Kraftstoffes unterstützt dabei grundsätzlich die Gemischaufbereitung d. h. auch die Homogenisierung des Gemisches im Rahmen eines LTC-Verfahrens.

Nachteilig an diesem herkömmlichen Verfahren zur Gemischbildung ist aber, daß sich - einerseits infolge der sehr dynamischen Verteilung des Kraftstoffes im Brennraum und andererseits aufgrund des kleinen Krümmungsradius des Muldenrandes - Turbulenzen im Kraftstoff-Luft-Gemisch ergeben, insbesondere im Bereich des Muldenrands beim Übergang in die Quetschzone, wodurch in wenigen, örtlich eng begrenzten Bereichen des Brennraums die Gemischbildung so weit voranschreitet, daß lokal die Bedingungen für eine Selbstzündung vorliegen, wohingegen in weiten Bereichen des Brennraums noch ein sehr inhomogenes Gemisch vorliegt. Aus diesem Grund wird die Selbstzündung früher eingeleitet als dies, insbesondere hinsichtlich eines guten Emissionsverhaltens der Brennkraftmaschine, erwünscht ist. Vorteilhafter wäre es, den Zündverzug zu vergrößern d. h. später zu zünden und das Gemisch vor Einleitung der Selbstzündung weiter zu homogenisieren.

Vor diesem Hintergrund ist es die Aufgabe der vorliegenden Erfindung, einen Kolben gemäß dem Oberbegriff des Anspruches 1 d. h. der gattungsbildenden Art bereitzustellen, mit dem die aus dem Stand der Technik bekannten Probleme überwunden werden und der insbesondere eine verbesserte Steuerung der kontrollierten Selbstzündung ermöglicht, wodurch der Anwendungsbereich von LTC-Verfahren hin zu höheren Drehzahlen und höheren Lasten erweitert wird.

Eine weitere Teilaufgabe der vorliegenden Erfindung ist es, ein Verfahren zur Bildung eines Kraftstoff-Luft-Gemisches unter Verwendung einer Einspritzeinrichtung und eines derartigen Kolbens aufzuzeigen.

Gelöst wird die erste Teilaufgabe durch einen Kolben mit Kolbenboden und im Kolbenboden vorgesehener Kolbenmulde, insbesondere für eine Brennkraftmaschine, welche einen Betrieb in zwei unterschiedlichen Betriebsmodi ermöglicht, der - im Betrieb der Brennkraftmaschine - entlang einer Kolbenlängsachse translatorisch bewegbar ist und bei dem die Kolbenmulde eine Omegaförmige Grundform aufweist und der dadurch gekennzeichnet ist, daß die der Kolbenlängsachse zugewandte Muldenoberfläche der Omegaförmigen Kolbenmulde einen konvexen Teilbereich aufweist, der in die Kolbenmulde hineinragt und unter Beibehaltung der Krümmungsrichtung und unter Ausbildung eines Muldenrandes in den Kolbenboden übergeht, wobei dieser konvexe Teilbereich einen minimalen Krümmungsradius $r_2$ aufweist mit $r_2 \geq 0.02\,d$, wobei d den Kolbendurchmesser angibt.

Der konvexe Teilbereich des erfindungsgemäßen Kolbens weist einen im Vergleich zum Stand der Technik vergrößerten Krümmungsradius auf. Der minimale Krümmungsradius $r_2$ ist nicht kleiner als $0.02\,d$, wobei d den Kolbendurchmesser angibt.

Dadurch werden Turbulenzen am Muldenrand beim Verteilen des eingespritzten Kraftstoffes verhindert. Die Gemischbildung verläuft anfangs d. h. zu Beginn der Kraftstoffverteilung bzw. Gemischaufbereitung weniger dynamisch. Der auf den konvexen Teilbereich bzw. Muldenrand gerichtete Einspritzstrahl wird beim Auftreffen in Teilstrahlen aufgespalten, wobei der eingespritzte Kraftstoff entlang der Muldenoberfläche in die Mulde hinein und aus der Mulde heraus in Richtung Quetschzone geführt bzw. transportiert wird.

Dadurch, daß die Kraftstoff- bzw. Kraftstoff-Luft-Strömung über einen weiten Bereich an der Muldenoberfläche anliegt und eine Ablösung infolge des erfindungsgemäß großen Krümmungsradius verhindert wird, können Turbulenzen und folglich eine verfrühte unkontrollierte Selbstzündung verhindert werden.

Zusätzlich wird den Teilen des Kraftstoff-Luft-Gemisches, welche wandgeführt werden, über die Muldenoberfläche Wärme durch Konvektion entzogen, so daß die Gemischaufbereitung in den für die Selbstzündung relevanten Gemischbereichen verlangsamt wird, wodurch eine unerwünschte vorzeitige Selbstzündung verhindert wird.

Bei der Verwendung eines erfindungsgemäßen Kolbens wird somit - aufgrund der verbesserten Muldenform d. h. Muldengeometrie - deutlich mehr Zeit für die Gemischaufbereitung bereitgestellt. Infolgedessen liegt zum Zeitpunkt der Selbstzündung ein besser aufbereitetes Gemisch, insbesondere ein besser homogenisiertes Kraftstoff-Luft-Gemisch vor.

Das Emissionsverhalten der Brennkraftmaschine wird verbessert. Die Stickoxidemissionen und Rußemissionen werden reduziert. Zudem kann das Anwendungsgebiet der sogenannten LTC-Verfahren hin zu höheren Lasten und höheren Drehzahlen ausgedehnt werden, da die Selbstzündung besser steuerbar d. h. leichter zu kontrollieren ist.

Dadurch wird die erste der Erfindung zugrunde liegende Aufgabe gelöst, nämlich einen Kolben bereitzustellen, der eine verbesserte Steuerung der kontrollierten Selbstzündung ermöglicht und die Anwendung von LTC-Verfahren hin zu höheren Drehzahlen und höheren Lasten ermöglicht. Die Vorteile des LTC-Verfahrens können damit in einem weiteren Bereich des Motorenkennfeldes genutzt werden, wodurch die Stickoxidemissionen und Rußemissionen reduziert werden.

Während die Gemischbildung bei Verwendung eines herkömmlichen Kolbens eher strahlgeführt ist, erfolgt die Mischung des Kraftstoffes mit der Verbrennungsluft bei Einsatz eines erfindungsgemäßen Kolbens auch wandgeführt.

Beim wandgeführten Verfahren wird der Kraftstoff in der Art in den Brennraum eingespritzt, daß der Einspritzstrahl gezielt auf eine den Brennraum begrenzende Wand gerichtet wird, vorzugsweise in die im Kolbenboden vorgesehene Mulde. Der Kraftstoffstrahl soll dabei durch den Aufprall in mehrere Teilstrahlen aufgespalten und umgelenkt werden, so daß ein möglichst großer Bereich des Brennraums von den Kraftstoffstrahlen erfaßt wird. D. h. die den Brennraum begrenzenden Wände werden gezielt zur Gemischbildung genutzt.

Beim strahlgeführten Verfahren erfolgt der Gemischtransport im wesentlichen durch den Impuls des Einspritzstrahls, wobei die kinetische Energie des Einspritzstrahls genutzt wird. Im Vergleich zu dem zuvor beschriebenen wandgeführten Verfahren ist dabei die Ausdehnung der aufbereiteten Kraftstoff-Luft-Gemischwolke prinzipbedingt begrenzt.

Eine klare Abgrenzung der beiden Verfahren ist aber nicht möglich. In der Regel verfügen Verfahren zur Gemischbildung über eine wandgeführte und eine strahlgeführte Komponente, wobei häufig eine Komponente dominiert.

Weitere Vorteile des erfindungsgemäßen Kolbens werden im Zusammenhang mit den Ausführungsformen gemäß den Unteransprüchen erörtert.

Vorteilhaft sind Ausführungsformen des Kolbens, bei denen der konvexe Teilbereich im mittleren Bereich und außerhalb des Muldenrandes einen minimalen Krümmungsradius $r_2$ aufweist mit $r_2 \geq 0.025\,d$, vorzugsweise mit $0.03\,d \leq r_2 \leq 0.09\,d$, wobei d den Kolbendurchmesser angibt.

In der Regel wird der konvexe Teilbereich seinen minimalen Krümmungsradius $r_2$ im mittleren Bereich und außerhalb des Muldenrandes aufweisen. Je größer dieser Krümmungsradius $r_2$ ist, desto vorteilhafter ist die Muldengeometrie im Hinblick auf die wandgestützte Strömungsführung.

Die wandgeführte Gemischaufbereitung wird erfindungsgemäß dadurch unterstützt, daß der konvexe Teilbereich unter Beibehaltung der Krümmungsrichtung in den Kolbenboden übergeht und dabei den Muldenrand ausbildet, wobei sich ein langgezogener weicher Übergang in Richtung Quetschzone - zur Vermeidung von Turbulenzen - als besonderes vorteilhaft erweist.

Vorteilhaft sind aus diesem Grund auch Ausführungsformen des Kolbens, bei denen der konvexe Teilbereich im Bereich des Muldenrandes zumindest teilweise einen Krümmungsradius $r_1$ aufweist mit $0.13\,d \leq r_1 \leq 0.43\,d$, vorzugsweise mit $0.18\,d \leq r_1 \leq 0.38\,d$, wobei d den Kolbendurchmesser angibt. Der vergleichsweise große Krümmungsradius des Muldenrandes verhindert, daß sich die Strömung beim Übergang von der Mulde zum Kolbenboden und in die Quetschzone hinein von der Muldenoberfläche ablöst.

Vorteilhaft sind Ausführungsformen des Kolbens, bei denen sich an den konvexen Teilbereich auf der dem Kolbenboden abgewandten Seite - zur Ausbildung der Omegaförmigen Grundform der Kolbenmulde - ein konkaver Bereich anschließt. Der direkte Übergang des konvexen Teilbereichs in den konkaven tiefer gelegenen Muldenbereich unterstützt ebenfalls die wandgeführte Gemischaufbereitung und wirkt einer Strömungsablösung entgegen.

Während beim erfindungsgemäßen Kolben der überwiegende Teil des eingespritzten Kraftstoffes umgelenkt und an der Muldenoberfläche entlang geführt wird, prallen bei der herkömmlichen Muldenform - in Abhängigkeit vom momentanen Betriebspunkt - mehr oder weniger große Teile des Einspritzstrahles an der Muldenoberfläche ab, werden aus der Kolbenmulde heraus beschleunigt, also nicht an der Wand umgelenkt und geführt.

Vorteilhaft sind dabei Ausführungsformen des Kolbens, bei denen der konkave Bereich im mittleren Bereich zumindest teilweise einen Krümmungsradius $r_3$ aufweist mit $0.05\ d \le r_3 \le 0.09\ d$, vorzugsweise mit $0.06\ d \le r_3 \le 0.075\ d$, wobei d den Kolbendurchmesser angibt.

Vorteilhaft sind Ausführungsformen des Kolbens, bei denen die Muldenoberfläche in Richtung Kolbenlängsachse unter Verringerung der Muldentiefe ansteigt. Dies unterstützt die Verteilung des eingespritzten Kraftstoffes insbesondere bei hohen Lasten d. h. großen Kraftstoffmengen. Der Anstieg der Mulde lenkt die Strömung aus der Mulde heraus in Richtung Zylinderkopf, was zu einer guten Luftausnutzung führt.

Vorteilhaft sind Ausführungsformen des Kolbens, bei denen die Kolbenmulde einen minimalen Durchmesser $D_1$ aufweist mit $0.48\ d \le D_1 \le 0.64\ d$, vorzugsweise mit $0.52\ d \le D_1 \le 0.6\ d$, wobei d den Kolbendurchmesser angibt und der minimale Durchmesser im Bereich des konvexen Teilbereichs vorliegt.

Je größer der Durchmesser $D_1$ gewählt wird, desto weiter ist der Weg für den Kraftstoff von der Einspritzeinrichtung bis hin zur Muldenoberfläche. Ein großer Durchmesser stellt sicher, daß auch bei hohen Lasten d. h. größeren einzuspritzenden Kraftstoffmengen eine weitestgehende Verdampfung des Kraftstoffes vor dem Auftreffen auf die Muldenoberfläche erfolgt. Zudem ist die Verbrennung geräuschärmer d. h. leiser.

Vorteilhaft sind Ausführungsformen des Kolbens, bei denen die Kolbenmulde eine maximale Tiefe $T_1$ aufweist mit $0.14\ d \le T_1 \le 0.24\ d$, vorzugsweise mit $0.18\ d \le T_1 \le 0.2\ d$, wobei d den Kolbendurchmesser angibt

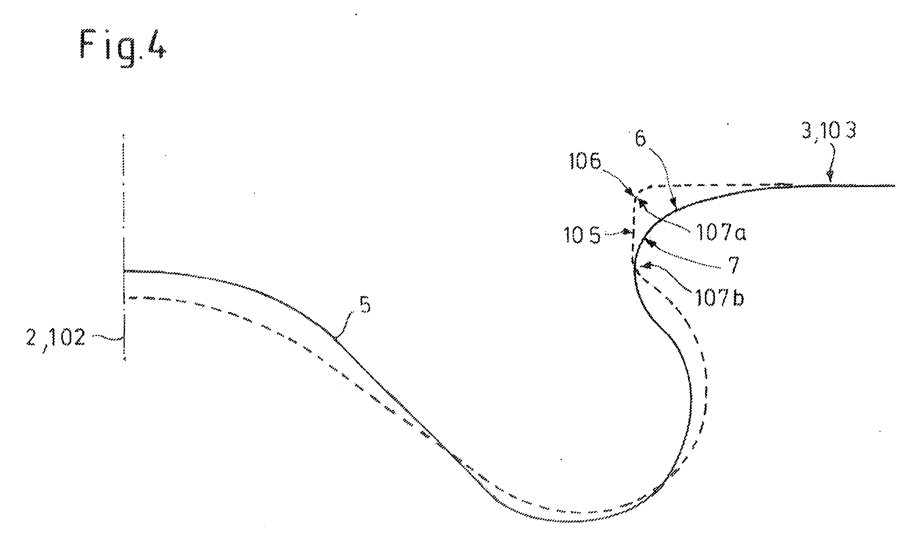

Damit verfügt der erfindungsgemäße Kolben über eine mit herkömmlichen Kolben vergleichbare maximale Muldentiefe, wobei die Mulde mittig vorzugsweise weniger tief ist d. h. eine geringere minimale Tiefe aufweist (siehe auch Figur 4).

Die zweite der Erfindung zugrundeliegende Teilaufgabe wird gelöst durch ein Verfahren zur Bildung eines Kraftstoff Luft-Gemisches unter Verwendung einer Einspritzeinrichtung und eines Kolbens der zuvor beschriebenen Art, bei dem mittels der Einspritzeinrichtung mindestens eine Einspritzung von Kraftstoff direkt in den Brennraum einer Brennkraftmaschine vorgenommen wird, wobei der Brennraum durch den Kolbenboden des Kolbens und ein Zylinderrohr mitbegrenzt wird, und das dadurch gekennzeichnet ist, daß

■ mittels der Einspritzeinrichtung ein kegelförmiger Einspritzstrahl mit einem Öffnungswinkel $\gamma$ ausgebildet wird mit $135° \le \gamma \le 160°$, und

■ der Einspritzzeitpunkt mindestens einer Einspritzung in der Art gewählt wird, daß der Einspritzstrahl in dem konvexen Teilbereich der Mulde auf die Muldenoberfläche gelenkt wird.

Vorteilhaft sind Verfahrensvarianten, bei denen der kegelförmige Einspritzstrahl einen Öffnungswinkel $\gamma$ aufweist mit $\gamma \le 150°$, vorzugsweise mit $140° \le \gamma \le 150°$.

Vorteilhaft sind des weiteren Verfahrensvarianten, bei denen eine Einspritzdüse als Einspritzeinrichtung verwendet wird, wobei die Einspritzdüse vorzugsweise mittig und entlang der Kolbenlängsachse ausgerichtet angeordnet ist.

Im Rahmen der vorliegenden Erfindung wird als Einspritzstrahl die Summe der durch die Einspritzeinrichtung bzw. die Düsenöffnungen der Einspritzdüse eingespritzten Kraftstoffstrahlen bezeichnet, so daß der Begriff "kegelförmiger Einspritzstrahl" den durch die Kraftstoffstrahlen aufgespannten Kegel kennzeichnet.

Das bereits für den erfindungsgemäßen Kolben Gesagte gilt auch für das erfindungsgemäße Verfahren.

Das LTC-Verfahren einerseits und das traditionelle dieselmotorische Verfahren andererseits stellen unterschiedliche Anforderungen an die Einspritzung. Das traditionelle dieselmotorische Verfahren erfordert zur besseren Luftausnutzung einen weiten Einspritzstrahl von beispielsweise 160°, so daß zur Vermeidung einer Ölverdünnung und zur Vermeidung hoher Emissionen an unverbrannten Kohlenwasserstoffen spät - in der Nähe des oberen Totpunktes (OT) - eingespritzt werden sollte.

Wird hingegen beim HCCI-Verfahren eine frühe Einspritzung zur Unterstützung der Homogenisierung des Gemisches als sinnvoll erachtet, würde dies zusammen mit einem weiten Einspritzstrahl von beispielsweise 160° dazu führen, daß der eingespritzte Kraftstoff teilweise auf die Zylinderrohrinnenwand trifft, was Nachteile hat, insbesondere eine zunehmende Ölverdünnung, aber auch erhöhte Emissionen an unverbrannten Kohlenwasserstoffen und Ruß.

Ein entsprechend eng d. h. klein gewählter Öffnungswinkel $\gamma$ würde daher eine frühe Einspritzung vor OT bzw. eine späte Einspritzung nach OT im Rahmen des HCCI-Verfahrens unterstützen.

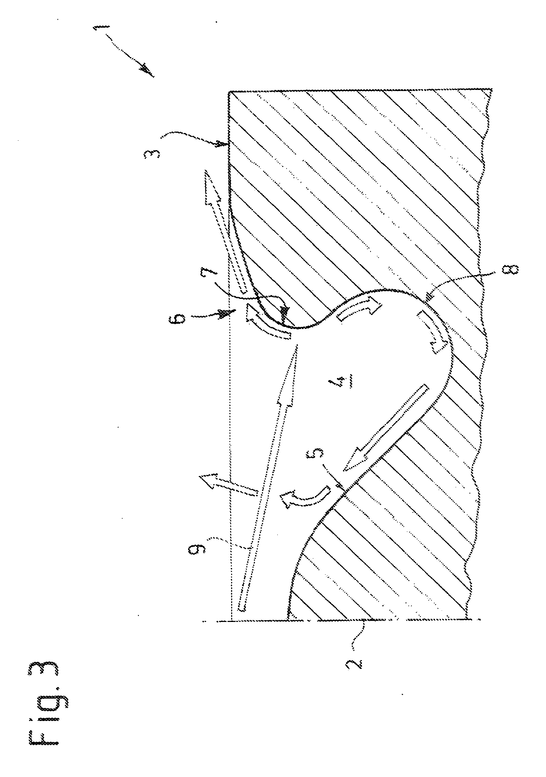

Ein verengter Öffnungswinkel $\gamma$ verschlechtert erfindungsgemäß auch nicht die Gemischbildung im Rahmen des traditionellen dieselmotorischen Verfahrens bei hohen Drehzahlen und hohen Lasten. Denn selbst wenn der Öffnungswinkel $\gamma$ kleiner ist und der Einspritzstrahl nicht den gesamten Brennraum erfaßt, kann eine schnelle Durchmischung des eingespritzten Kraftstoffes mit den verdichteten Gasen sichergestellt werden. Insbesondere der konkave Teilbereich der Mulde gewährleistet auch bei hohen Lasten d.h. größeren Kraftstoffmengen eine ausreichende Luftausnutzung, wobei der Kraftstoff entlang der Muldenoberfläche in Richtung Muldenmitte und in Richtung Zylinderkopf transportiert wird (siehe auch Figur 3).

Grundsätzlich eignet sich der erfindungsgemäße Kolben auch für späte Einspritzungen in der Nähe des oberen Totpunktes (OT), da der eingespritzte Kraftstoff vergleichsweise schnell im gesamten Brennraum verteilt wird.

Das erfindungsgemäße Verfahren zur Gemischbildung ermöglicht einen Betrieb der Brennkraftmaschine sowohl nach dem herkömmlichen dieselmotorischen Verfahren als auch nach einem LTC-Verfahren, so daß in Abhängigkeit vom jeweiligen Betriebspunkt der Brennkraftmaschine im Motorkennfeld entweder das LTC-Verfahren oder das traditionelle dieselmotorische Verfahren zum Einsatz kommen kann.

Darüber hinaus sind auch Mischformen möglich, bei denen der in den Zylinder eingespritzte Kraftstoff teilweise als homogenisierte Ladung kontrolliert selbst zündet (LTC-Verfahren) und teilweise nach dem traditionellen Verfahren - kontrolliert mittels Diffusionsflamme - als inhomogenes Gemisch verbrannt wird.

Vorteilhaft sind Ausführungsformen des Verfahrens, bei denen der eingespritzte Kraftstoff vor dem Auftreffen auf die Muldenoberfläche weitestgehend verdampft wird. Dadurch wird verhindert, daß die Muldenoberfläche mit flüssigem Kraftstoff benetzt wird, was die Emission an unverbrannten Kohlenwasserstoffen (HC) und Ruß signifikant erhöhen würde und somit im Hinblick auf eine gutes Emissionsverhalten zu vermeiden ist.

Vorteilhaft sind Ausführungsformen des Verfahrens, bei denen im Rahmen eines Ladungswechsels eine Rückführung von Abgas (AGR) in den Brennraum der Brennkraftmaschine vorgenommen wird mit einer AGR-Rate bis zu 65%. Dabei wird das Abgas vorzugsweise gekühlt zurückgeführt.

Die Abgasrückführrate $X_{AGR}$ bestimmt sich dabei wie folgt:

$$x_{AGR} = m_{AGR} / (m_{AGR} + m_{Frischluft})$$

wobei $m_{AGR}$ die Masse an zurückgeführtem Abgas und $m_{Frischluft}$ die zugeführte - gegebenenfalls durch einen Verdichter geführte und komprimierte - Frischluft bzw. Verbrennungsluft bezeichnet.

Im Rahmen des LTC-Verfahrens werden wesentlich höhere AGR-Raten als beim herkömmlichen dieselmotorischen Verfahren realisiert. Selbst für späte Einspritzzeitpunkte kann bei niedrigen Drehzahlen und kleinen Kraftstoffmengen eine hohe Homogenisierung des Gemisches gewährleistet werden.

Durch das zurückgeführte Abgas wird der Sauerstoffgehalt reduziert, der Zündverzug vergrößert und die Selbstzündung des Dieselkraftstoffes nach spät verschoben. Dadurch können gleichzeitig sowohl die Stickoxide als auch die Rußemissionen gesenkt werden.

Vorteilhaft sind Ausführungsformen des Verfahrens, bei denen im Rahmen eines Ladungswechsels im Brennraum der Brennkraftmaschine ein Drall ausgebildet wird mit $1.0 \leq DZ \leq 2.5$, vorzugsweise mit $1.6 \leq DZ \leq 2.2$. Die Drallzahl DZ ergibt sich dabei aus dem Verhältnis der Winkelgeschwindigkeit der Zylinderinnenströmung und der Winkelgeschwindigkeit der Kurbelwelle. Bei dieser Verfahrensvariante wird die Gemischbildung - wie bei einem luftgeführten Brennverfahren - zusätzlich durch die Bewegung der Verbrennungsluft im Brennraum unterstützt.

Bei luftgeführten Brennverfahren wird versucht, eine Ladungsbewegung im Brennraum beim Ansaugen der Luft zu erzeugen, um auf diese Weise eine gute Durchmischung der angesaugten Luft und des direkt eingespritzten Kraftstoffes zu erzielen. Dabei wird eine möglichst weiträumige Verteilung des Kraftstoffes im gesamten Brennraum angestrebt.

Insbesondere bei hohen Drehzahlen, bei denen nur wenig Zeit zur Gemischaufbereitung zur Verfügung steht, und höheren Lasten d. h. größeren, im Brennraum zu verteilenden Kraftstoffmengen fördert die Ladungsbewegung die Homogenisierung des Kraftstoff-Luft-Gemisches.

Ein Drall ist definitionsgemäß ein Luftwirbel um eine gedachte Achse, welche parallel zur Kolben- bzw. Zylinderlängsachse verläuft, im Gegensatz zu einem Tumble, der einen Luftwirbel darstellt, dessen Achse senkrecht zur Kolbenlängsachse verläuft.

Vorteilhaft sind Ausführungsformen des Verfahrens, bei denen zur Ausbildung des kegelförmigen Einspritzstrahls fünf bis zehn Teilstrahlen verwendet werden.

Im folgenden wird die Erfindung anhand eines Ausführungsbeispieles gemäß den Figuren 1 bis 4 näher beschrieben. Hierbei zeigt:

Fig.1   schematisch einen herkömmlichen Kolben mit konventioneller Muldenform im Halbschnitt entlang der Kolbenlängsachse zusammen mit einem Einspritzstrahl und den umgelenkten Teilströmungen,

Fig. 2   schematisch die Mulde einer ersten Ausführungsform des Kolbens im Halbschnitt entlang der Kolbenlängsachse,

Fig. 3   schematisch die erste Ausführungsform des Kolbens im Halbschnitt entlang der Kolbenlängsachse zusammen mit einem Einspritzstrahl und den umgelenkten Teilströmungen, und

Fig. 4   schematisch im Halbschnitt entlang der Kolbenlängsachse die in Figur 1 dargestellte Kolbenmulde zusammen mit der in Figur 2 dargestellten Mulde.

Figur 1 wurde bereits im Zusammenhang mit dem Stand der Technik beschrieben.

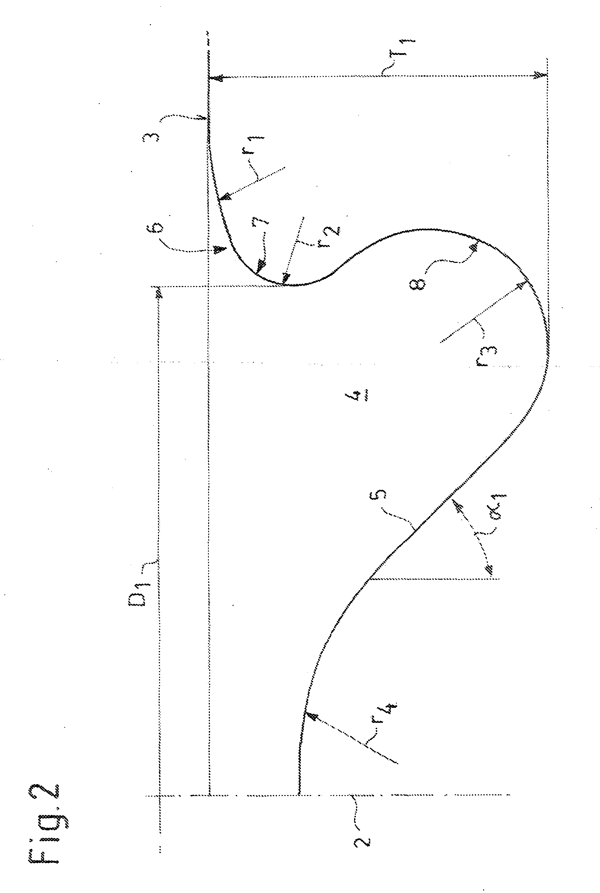

Figur 2 zeigt schematisch die Mulde 4 einer ersten Ausführungsform des Kolbens im Halbschnitt entlang der Kolbenlängsachse 2. In Figur 3 sind ein Einspritzstrahl 9 und die in der Mulde 4 der ersten Ausführungsform des Kolbens 1 sich ausbildenden Strömungen illustriert.

Wie in den Figuren 2 und 3 dargestellt, weist die im Kolbenboden 3 vorgesehene Mulde 4 zur Ausbildung der Omegaförmigen Grundform der Kolbenmulde 4 einen konkaven Bereich 8 mit einem Krümmungsradius $r_3$ auf, wobei die Muldenoberfläche 5 in Richtung Kolbenlängsachse 2 unter Verringerung der Muldentiefe in einem Winkel $\alpha_1$ ansteigt und unter Ausbildung eines Krümmungsradius $r_4$ in die Muldenmitte übergeht, wo ein Plateau ausbildet wird. Dabei schneidet die Oberfläche 5 die Kolbenlängsachse 2 in einem rechten Winkel.

Der konkave Bereich 8 unterstützt die Verteilung des eingespritzten Kraftstoffes insbesondere bei hohen Lasten d. h. großen Kraftstoffmengen. Der Anstieg der Muldenoberfläche 5 bzw. der Mulde 4 lenkt die Strömung aus der Mulde 4 heraus in Richtung Zylinderkopf, was zu einer guten Luftausnutzung führt.

Der konkave tiefgelegene Muldenbereich 8 geht - auf der der Muldenmitte abgewandten Seite - unter Änderung der Krümmungsrichtung in einen konvexen Teilbereich 7 über. Dieser konvexe Teilbereich 7 ragt in die Kolbenmulde 4 hinein und geht unter Beibehaltung der Krümmungsrichtung und unter Ausbildung eines Muldenrandes 6 in den Kolbenboden 3 über.

Der Kolben 1 bzw. die Mulde 4 ist dadurch gekennzeichnet ist, daß der konvexe Teilbereich 7 einen vergleichsweise großen Krümmungsradius $r_2$ bzw. $r_1$ aufweist, wodurch ein weicher d. h. langgezogener Übergang der Muldeoberfläche 5 in den Kolbenboden 3 realisiert wird, was Turbulenzen verhindert.

Der auf den konvexen Teilbereich 7 gerichtete Einspritzstrahl 9 wird beim Auftreffen in Teilstrahlen aufgespalten, wobei der eingespritzte Kraftstoff entlang der Muldenoberfläche 5 in die Mulde 4 hinein und aus der Mulde 4 heraus in Richtung Quetschzone geführt bzw. transportiert wird (siehe Figur 3).

Die Kolbenmulde 4 hat einen minimalen Durchmesser $D_1$ im Bereich des konvexen Teilbereichs 7 und eine maximale Tiefe $T_1$ im konkaven Bereich 8. Die Mulde 4 und eine herkömmliche Mulde 104 nach dem Stand der Technik verfügen damit über eine ähnlich große maximale Tiefe $T_1$ und einen vergleichbaren minimalen Durchmesser $D_1$ (siehe auch Figur 4). Figur 4 zeigt schematisch im Halbschnitt entlang der Kolbenlängsachsen 2, 102 die in Figur 1 dargestellte herkömmliche Mulde 104 (gestrichelte Linie) zusammen mit der in Figur 2 dargestellten Kolbenmulde 4 (durchgezogenen Linie).

## Bezugszeichen

1    Kolben
2    Kolbenlängsachse
3    Kolbenboden
4    Kolbenmulde
5    Muldenoberfläche
6    Muldenrand
7    konvexer Teilbereich
8    konkaver Bereich
9    Einspritzstrahl

101    Kolben
102    Kolbenlängsachse
103    Kolbenboden
104    Kolbenmulde
105    Muldenoberfläche
106    Muldenrand
107a   erster konvexer Teilbereich
107b   zweiter konvexer Teilbereich
108    konkaver Bereich
109    Einspritzstrahl

$\alpha_1$    Steigungswinkel
$\gamma$    Öffnungswinkel des Einspritzstrahls
d    Kolbendurchmesser
$D_1$    minimaler Muldendurchmesser
DZ    Drallzahl
OT    oberer Totpunkt
$r_1$    Krümmungsradius des Muldenrandes
$r_2$    minimaler Krümmungsradius des konvexen Teilbereichs
$r_3$    Krümmungsradius des konkaven Bereichs
$r_4$    Krümmungsradius beim Übergang zur Kolbenmitte
$T_1$    maximale Muldentiefe
$x_{AGR}$    Abgasrückführrate

## Patentansprüche

1.   Kolben (1) mit Kolbenboden (3) und im Kolbenboden (3) vorgesehener Kolbenmulde (4), insbesondere für eine Brennkraftmaschine, welche einen Betrieb in zwei unterschiedlichen Betriebsmodi ermöglicht, der - im Betrieb der Brennkraftmaschine - entlang einer Kolbenlängsachse (2) translatorisch bewegbar ist und bei dem dic Kolbenmulde (4) eine Omegaförmige Grundform aufweist, wobei die der Kolbenlängsachse (2) zugewandte Muldenoberfläche (5) der omegaförmigen Kolbenmulde (4) einen konvexen Teilbereich (7) aufweist, der in die Kolbenmulde (4) hineinragt und unter Beibehaltung der Krümmungsrichtung und unter Ausbildung eines Muldenrandes (6) in den Kolbenboden (3) übergeht,
     **dadurch gekennzeichnet, daß**
     dieser konvexe Teilbereich (7) einen minimalen Krümmungsradius $r_2$ aufweist mit $r_2 \geq 0.02\,d$ und im Bereich des Muldenrandes (6) zumindest teilweise einen Krümmungsradius $r_1$ aufweist mit $0.13\,d \leq r_1 \leq 0.43\,d$, wobei d den Kolbendurchmesser angibt.

**2.** Kolben (1) nach Anspruch 1,
**dadurch gekennzeichnet, daß**
der konvexe Teilbereich (7) einen minimalen Krümmungsradius $r_2$ aufweist mit $r_2 \geq 0.025\ d$, vorzugsweise mit $0.03\ d \leq r_2 \leq 0.09\ d$, wobei d den Kolbendurchmesser angibt.

**3.** Kolben (1) nach Anspruch 1 oder 2,
**dadurch gekennzeichnet, daß**
der konvexe Teilbereich (7) im Bereich des Muldenrandes (6) zumindest teilweise einen Krümmungsradius r, aufweist mit $0.18\ d \leq r_1 \leq 0.38\ d$, wobei d den Kolbendurchmesser angibt.

**4.** Kolben (1) nach einem der vorherigen Ansprüche,
**dadurch gekennzeichnet, daß**
sich an den konvexen Teilbereich (7) auf der dem Kolbenboden (3) abgewandten Seite - zur Ausbildung der Omegaförmigen Grundform der Kolbenmulde (4) - ein konkaver Bereich (8) anschließt.

**5.** Kolben (1) nach Anspruch 4,
**dadurch gekennzeichnet, daß**
der konkave Bereich (8) zumindest teilweise einen Krümmungsradius $r_3$ aufweist mit $0.05\ d \leq r_3 \leq 0.09\ d$, vorzugsweise mit $0.06\ d \leq r_3 \leq 0.075\ d$, wobei d den Kolbendurchmesser angibt.

**6.** Kolben (1) nach einem der vorherigen Ansprüche,
**dadurch gekennzeichnet, daß**
die Muldenoberfläche (5) in Richtung Kolbenlängsachse (2) unter Verringerung der Muldentiefe ansteigt.

**7.** Kolben (1) nach einem der vorherigen Ansprüche,
**dadurch gekennzeichnet, daß**
die Kolbenmulde (4) einen minimalen Durchmesser $D_1$ aufweist mit $0.48\ d \leq D_1 \leq 0.64\ d$, vorzugsweise mit $0.52\ d \leq D_1 \leq 0.6\ d$, wobei d den Kolbendurchmesser angibt und der minimale Durchmesser im Bereich des konvexen Teilbereichs (7) vorliegt.

**8.** Kolben (1) nach einem der vorherigen Ansprüche,
**dadurch gekennzeichnet, daß**
die Kolbenmulde (4) eine maximale Tiefe $T_1$ aufweist mit $0.14\ d \leq T_1 \leq 0.24\ d$, vorzugsweise mit $0.18\ d \leq T_1 \leq 0.2\ d$, wobei d den Kolbendurchmesser angibt.

**9.** Verfahren zur Bildung eines Kraftstoff-Luft-Gemisches unter Verwendung einer Einspritzeinrichtung und eines Kolbens (1) nach einem der vorherigen Ansprüche, bei dem mittels der Einspritzeinrichtung mindestens eine Einspritzung von Kraftstoff direkt in den Brennraum einer Brennkraftmaschine vorgenommen wird, wobei der Brennraum durch den Kolbenboden (3) des Kolbens (1) und ein Zylinderrohr mitbegrenzt wird, **dadurch gekennzeichnet, daß**

■ mittels der Einspritzeinrichtung ein kegelförmiger Einspritzstrahl mit einem Öffnungswinkel y ausgebildet wird mit $135° \leq \gamma \leq 160°$, und
■ der Einspritzzeitpunkt mindestens einer Einspritzung in der Art gewählt wird, daß der Einspritzstrahl in dem konvexen Teilbereich (7) der Mulde (4) auf die Muldenoberfläche (5) gelenkt wird.

**10.** Verfahren nach Anspruch 9,
**dadurch gekennzeichnet, daß**
der eingespritzte Kraftstoff vor dem Auftreffen auf die Muldenoberfläche (5) weitestgehend verdampft wird.

**11.** Verfahren nach Anspruch 9 oder 10,
**dadurch gekennzeichnet, daß**
im Rahmen eines Ladungswechsels eine Rückführung von Abgas (AGR) in den Brennraum der Brennkraftmaschine vorgenommen wird mit einer AGR-Rate bis zu 65%.

**12.** Verfahren nach einem der Ansprüche 9 bis 11,
**dadurch gekennzeichnet, daß**
im Rahmen eines Ladungswechsels im Brennraum der Brennkraftmaschine ein Drall ausgebildet wird mit einer Drallzahl DZ, für die gilt: $1.0 \leq DZ \leq 2.5$, vorzugsweise mit $1.6\ d \leq DZ \leq 2.2$.

**13.** Verfahren nach einem der Ansprüche 9 bis 12,
**dadurch gekennzeichnet, daß**
zur Ausbildung des kegelförmigen Einspritzstrahls fünf bis zehn Teilstrahlen (9) verwendet werden.

**Claims**

**1.** Piston (1) having a piston crown (3) and having a piston depression (4) provided in the piston crown (3), in particular for an internal combustion engine which permits operation in two different operating modes, which piston - during operation of the internal combustion engine - is movable in translatory fashion along a piston longitudinal axis (2) and in which piston the piston depression (4) has an omega-shaped basic form, wherein the depression surface (5), facing toward the piston longitudinal axis (2), of the omega-shaped piston depression (4) has a convex partial region (7), which projects into the piston depression (4) and which merges, maintaining the direction of curvature and forming a depression edge (6), into the piston crown (3),
**characterized in that**
said convex partial region (7) has a minimum radius of curvature $r_2$ where $r_2 \geq 0.02\ d$, and in the region of the depression edge (6), at least partially has a radius of curvature $r_1$ where $0.13\ d \leq r_1 \leq 0.43\ d$, wherein d denotes the piston diameter.

**2.** Piston (1) according to Claim 1,
**characterized in that**
the convex partial region (7) has a minimum radius of curvature $r_2$ where $r_2 \geq 0.025$ d, preferably where $0.03$ d $\leq r_2 \leq 0.09$ d, wherein d denotes the piston diameter.

**3.** Piston (1) according to Claim 1 or 2,
**characterized in that**,
the convex partial region (7) at least partially has a radius of curvature $r_1$ in the region of the depression edge (b) where $0.18$ d $\leq r_1 \leq 0.38$ d, wherein d denotes the piston diameter.

**4.** Piston (1) according to one of the preceding claims,
**characterized in that**
the convex partial region (7) is adjoined, on the side facing away from the piston crown (3) and in order to form the omega-shaped basic form of the piston depression (4), by a concave region (8).

**5.** Piston (1) according to Claim 4,
**characterized in that**
the concave region (8) at least partially has a radius of curvature $r_3$ where $0.05$ d $\leq r_3 \leq 0.09$ d, preferably where $0.06$ d $\leq r_3 \leq 0.075$ d, wherein d denotes the piston diameter.

**6.** Piston (1) according to one of the preceding claims,
**characterized in that**
the depression surface (5) rises, with an associated decrease in depression depth, in the direction of the piston longitudinal axis (2).

**7.** Piston (1) according to one of the preceding claims,
**characterized in that**
the piston depression (4) has a minimum diameter $D_1$ where $0.48$ d $\leq D_1 \leq 0.64$ d, preferably where $0.52$ d $\leq D_1 \leq 0.6$ d, wherein d denotes the piston diameter and the minimum diameter exists in the region of the convex partial region (7).

**8.** Piston (1) according to one of the preceding claims,
**characterized in that**
the piston depression (4) has a maximum depth $T_1$ where $0.14$ d $\leq T_1 \leq 0.24$ d, preferably where $0.18$ d $\leq T_1 \leq 0.2$ d, wherein d denotes the piston diameter.

**9.** Method for forming a fuel-air mixture using an injection device and a piston (1) according to one of the preceding claims, in which method at least one injection of fuel directly into the combustion chamber of an internal combustion engine is performed by means of the injection device, wherein the combustion chamber is jointly delimited by the piston crown (3) of the piston (1) and by a cylinder barrel,
**characterized in that**,
by means of the injection device, a conical injection jet is formed which has an opening angle $\gamma$ where $135° \leq \gamma \leq 160°$, and
the injection time of at least one injection is selected such that the injection jet is directed in the convex partial region (7) of the depression (4) onto the depression surface (5).

**10.** Method according to Claim 9,
**characterized in that**
the injected fuel is substantially evaporated before it impinges on the depression surface (5).

**11.** Method according to Claim 9 or 10,
**characterized in that**,
during the course of a charge exchange, a recirculation of exhaust gas (EGR) into the combustion chamber of the internal combustion engine is performed with an EGR rate of up to 65%.

**12.** Method according to one of Claims 9 to 11, **characterized in that**,
during the course of a charge exchange, swirl is generated in the combustion chamber of the internal combustion engine with a swirl number DZ for which the following applies: $1.0 \leq DZ \leq 2.5$, preferably where $1.6 \leq DZ \leq 2.2$.

**13.** Method according to one of Claims 9 to 12, **characterized in that**
five to ten component jets (9) are used to form the conical injection jet.


**Revendications**

**1.** Piston (1) comprenant un fond de piston (3) et une cavité de piston (4) prévue dans le fond de piston (3), en particulier pour un moteur à combustion interne qui permet un fonctionnement dans deux modes de fonctionnement différents, lequel, lors du fonctionnement du moteur à combustion interne, est mobile en translation le long d'un axe longitudinal du piston (2) et dans lequel la cavité de piston (4) présente une forme de base en forme d'oméga,
la surface de cavité (5), tournée vers l'axe longitudinal du piston (2), de la cavité de piston (4) en forme d'oméga comprenant une région partielle convexe (7) qui pénètre dans la cavité de piston (4) et, en maintenant la direction de courbure et en formant un bond de cavité (6), se prolonge dans le fond de piston (3),
**caractérisé en ce que**
cette région partielle convexe (7) présente un rayon de courbure minimal $r_2$ avec $r_2 \geq 0,02$ d et présente, dans la région du bond de cavité (6), au moins partiellement un rayon de courbure $r_1$ avec $0,13$ d $\leq r_1 \leq 0,43$ d, d indiquant le diamètre du piston.

**2.** Piston (1) selon la revendication 1, **caractérisé en ce que** la région partielle convexe (7) présente un rayon de courbure minimal $r_2$ avec $r_2 \geq 0,025$ d, de préférence avec $0,03$ d $\leq r_2 \leq 0,09$ d, d indiquant le diamètre du piston.

**3.** Piston (1) selon la revendication 1 ou 2, **caractérisé en ce que** la région partielle convexe (7) présente, dans la région du bond de cavité (6), au moins partiellement un rayon de courbure $r_1$ avec $0,18$ d $\leq r_1 \leq 0,38$ d, d indiquant le diamètre du piston.

**4.** Piston (1) selon l'une quelconque des revendications précédentes, **caractérisé en ce que** pour former la forme de base en forme d'oméga de la cavité de piston (4), une région concave (8) se raccorde à la région partielle convexe (7) du côté opposé au fond de piston (3).

**5.** Piston (1) selon la revendication 4, **caractérisé en ce que** la région concave (8) présente au moins partiellement un rayon de courbure $r_3$ avec $0,05$ d $\leq r_3 \leq 0,09$ d, de préférence avec $0,06$ d $\leq r_3 \leq 0,075$ d, d indiquant le diamètre du piston.

**6.** Piston (1) selon l'une quelconque des revendications précédentes, **caractérisé en ce que** la surface de cavité (5) s'élève en direction de l'axe longitudinal du piston (2), avec réduction de la profondeur de la cavité.

**7.** Piston (1) selon l'une quelconque des revendications précédentes, **caractérisé en ce que** la cavité de piston (4) présente un diamètre minimal $D_1$ avec $0,48$ d $\leq D_1 \leq 0,64$ d, de préférence avec $0,52$ d $\leq D_1 \leq 0,6$ d, d indiquant le diamètre du piston et le diamètre minimal étant présent dans la zone de la région partielle convexe (7).

**8.** Piston (1) selon l'une quelconque des revendications précédentes, **caractérisé en ce que** la cavité de piston (4) présente une profondeur maximale $T_1$ avec $0,14$ d $\leq T_1 \leq 0,24$ d, de préférence avec $0,18$ d $\leq T_1 \leq 0,2$ d, d indiquant le diamètre du piston.

**9.** Procédé de formation d'un mélange air-carburant en utilisant un dispositif d'injection et un piston (1) selon l'une quelconque des revendications précédentes, au moins une injection de carburant étant effectuée directement dans la chambre de combustion d'un moteur à combustion interne au moyen du dispositif d'injection, la chambre de combustion étant limitée conjointement par le fond de piston (3) du piston (1) et par un tube cylindrique, **caractérisé en ce qu'**un jet d'injection conique présentant un angle d'ouverture $\gamma$ est réalisé au moyen du dispositif d'injection, avec $135° \leq \gamma$ 160° et

 • le point d'injection d'au moins une injection est choisi de manière à ce que le jet d'injection soit dirigé dans la région partielle convexe (7) de la cavité (4) sur la surface de cavité (5).

**10.** Procédé selon la revendication 9, **caractérisé en ce que** le carburant injecté est vaporisé dans une très large mesure avant son impact sur la surface de cavité (5).

**11.** Procédé selon la revendication 9 ou 10, **caractérisé en ce que**, dans le cadre d'un changement de la charge, une recirculation des gaz d'échappement (REG) est effectuée dans la chambre de combustion du moteur à combustion interne avec un taux de recirculation des gaz d'échappement jusqu'à 65%.

**12.** Procédé selon l'une quelconque des revendications 9 à 11, **caractérisé en ce que**, dans le cadre d'un changement de la charge, une turbulence est réalisée dans la chambre de combustion du moteur à combustion interne avec un nombre de swirl DZ pour lequel l'on a : $1,0 \leq$ DZ 2,5, de préférence avec $1,6 \leq$ DZ 2,2.

**13.** Procédé selon l'une quelconque des revendications 9 à 12, **caractérisé en ce que** cinq à dix jets partiels (9) sont utilisés pour former le jet d'injection conique.

Fig.1

Fig.2

EP 2 003 304 B1

Fig.3

EP 2 003 304 B1

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6390054 B1